# EUROPÄISCHE PATENTSCHRIFT

(11) **EP 0 783 815 B1**
(45) Veröffentlichungstag und Bekanntmachung des Hinweises auf die Patenterteilung: **03.03.1999**
(21) Anmeldenummer: 95931892.4
(22) Anmeldetag: 20.09.1995
(51) Int. Cl.: H04N 1/417

(54) **BILDVERARBEITUNGSVORRICHTUNG ZUR SEQUENTIELLEN KODIERUNG UND DEKODIERUNG VON BILDINFORMATIONEN**
IMAGE PROCESSING DEVICE FOR THE SEQUENTIAL CODING AND DECODING OF IMAGE DATA
DISPOSITIF DE TRAITEMENT D'IMAGES POUR LE CODAGE ET LE DECODAGE SEQUENTIELS DE DONNEES-IMAGE

(30) Priorität: 23.09.1994 DE 4434068
(43) Veröffentlichungstag der Anmeldung: 16.07.1997
(73) Patentinhaber: Océ Printing Systems GmbH, 85586 Poing (DE)
(72) Erfinder: MURMURACHI, Alexander, D-86152 Augsburg (DE)
(74) Vertreter: Schaumburg, Thoenes, Thurn Patentanwälte
(86) Internationale Anmeldenummer: DE9501293
(87) Internationale Veröffentlichungsnummer: WO9609719

(56) Entgegenhaltungen:
- US-A- 4 149 145
- US-A- 4 654 719
- US-A- 4 860 114

## Beschreibung

Die Erfindung betrifft eine Vorrichtung und ein Verfahren zur sequentiellen Kodierung und Dekodierung von Bildinformationen. Ein Bild, das beispielsweise eine Grafik, Text oder ähnliches beinhaltet, besteht aus einer Mehrzahl einzelner Bildpunkte, sogenannter Pixel, die matrixartig angeordnet sind. Jede Zeile dieser Matrix enthält eine Anzahl von Bildpunkten, die entweder den Wert "weiß" oder "schwarz" repräsentieren. Diese Pixel können durch einen Bildschirm, einen Drucker oder ein anderes Bildwiedergabegerät sichtbar gemacht werden. Zum Transportieren oder Speichern eines Bildes wird die Bildinformation jedoch komprimiert. Die komprimierten Bildinformationen können dekomprimiert und wieder sichtbar gemacht werden.

Solche Komprimierungs- und Dekomprimierungsverfahren sind aus der Faksimiletechnik bekannt und beispielsweise im CCITT, "The International Telegraph Consultative Committee" , Blue Book, Vol. VII-Facsimile VII.3, Recommendations T.0 - T.63, beschrieben. Außer diesen vom CCITT festgelegten Komprimierungs- und Dekomprimierungsvorschriften, werden auch andere Komprimierungs- und Dekomprimierungsvorschriften ,wie z.B. von HP (Hewlett Packard) verwendet. Bei diesen gebräuchlichen Vorschriften werden Algorithmen angewendet, die nicht nur die Informationen innerhalb einer Zeile (z.B. Huffman Encoding) miteinander verknüpfen, sondern auch solche, die eine Verknüpfung der Bildinformationen zweier aufeinanderfolgender Zeilen durchführen. Um eine solche Verknüpfung vorzunehmen, wird eine Verarbeitungseinheit, die die Verknüpfungsoperation durchführt benötigt. Dieser Verarbeitungseinheit muß auch eine Speichereinrichtung zugeordnet sein, aus der stets ein gerade benötigtes Pixel einer Referenzzeile auslesbar und ein erzeugtes Pixel einer aktuellen Zeile einschreibbar sein muß.

Aus EP-0-341 272 B1, ist eine Dekodierungseinrichtung bekannt, die aus nach CCITT kodierten Bildinformationen Pixel erzeugt. Eine Verarbeitungseinrichtung arbeitet dazu mit einer Speichereinrichtung zusammen. Die Speichereinrichtung enthält zwei getrennte Speicher, von denen einer sämtliche Pixel der Referenzzeile enthält. In den anderen Speicher werden die während der Dekodierung erzeugten Pixel sequentiell nacheinander eingeschrieben. Ist die aktuelle Zeile vollständig dekodiert, dann liegen alle Pixel dieser Zeile im Speicher für die aktuelle Zeile. Die ehemalige Referenzzeile wird nicht mehr benötigt und die aktuelle Zeile soll bei der Dekodierung der nachfolgenden Zeile als Referenzzeile dienen. Deshalb werden die Speichereinträge des Speichers für die aktuelle Zeile in den Speicher für die Referenzzeile übertragen. Anschließend wird mit der Dekodierung der nächsten Zeile unter Verwendung der neuen Referenzzeile begonnen.

Beim Stand der Technik, z.B auch in US-A-4 860 114, wird durch den Aufbau der Speichereinrichtung mittels zweier getrennter Speicher eine Erhöhung der Geschwindigkeit der Verarbeitungseinheit bei der Dekompression von Bilddaten erreicht. Aufgrund dieser Geschwindigkeitserhöhung besteht jedoch ein großer Bedarf an schnellen Speichern. Dieser hohe Speicherbedarf verbraucht eine verhältnismäßig große Halbleiterfläche. Eine solche ist jedoch in der Regel nicht verfügbar, da die Bildverarbeitungsvorrichtung in der Regel durch einen integrierten Schaltkreis in Form eines ASIC (Application Specific Integrated Circuit) realisiert wird. Mit diesen Bausteinen lassen sich hohe Anforderungen an die Verarbeitungsgeschwindigkeit befriedigen. Aufgrund der begrenzten zur Verfügung stehenden Fläche auf einem ASIC , muß die für die Speichereinrichtung benötigte Fläche auf ein Mindestmaß reduziert oder eine Auslagerung der Speicher aus dem ASIC vorgenommen werden.

Ein Weg zu einer wirksamen Reduzierung der benötigten Speicherfläche zu gelangen ist in einer parallelen Anmeldung der Anmelderin beschrieben. Die dort beschriebene Speichereinrichtung kann zur Bildverarbeitung eingesetzt werden. Bei dieser Speichereinrichtung kann jedoch jedes Pixel der Referenzzeile nur einmal aus der Speichereinrichtung ausgelesen werden. Zur Kodierung und Dekodierung werden aber unter bestimmten Bedingungen, beispielsweise bei Vorliegen des "Vertical Modes" gemäß CCITT, einzelne Pixel der Referenzzeile mehrfach benötigt.

Der vorliegenden Erfindung liegt deshalb die Aufgabe zugrunde, eine Bildverarbeitungsvorrichtung zur sequentiellen Kodierung und Dekodierung von Bildinformationen aufzuzeigen, die eine hohe Verarbeitungsgeschwindigkeit bei minimalem Speicherbedarf ermöglicht .

Diese Aufgabe wird anhand der im Patentanspruch 1 angegebenen Merkmale gelöst. Eine Ausgestaltung und Weiterbildung der Erfindung ist im Unteranspruch angegeben.

Die erfindungsgemäße Bildverarbeitungsvorrichtung enthält eine Speichereinrichtung, die nur einen einzigen Speicher aufweist. Dieser Speicher hat nur eine geringfügig größere Kapazität als zur Aufnahme der Pixel einer vollständigen Zeile erforderlich ist. Die Speichereinrichtung erfüllt dennoch die Anforderung, wonach gleichzeitig einzelne Pixel der Referenzzeile lesbar und erzeugte Pixel der aktuellen Zeile in die Speichereinrichtung schreibbar sein müssen. Dennoch ist der Flächenbedarf der Speichereinrichtung nur etwa halb so groß, wie bei bekannten Bildverarbeitungsvorrichtungen zur sequentiellen Kodierung und Dekodierung von Bildinformationen.

Die Abstandseinheit ermöglicht eine Simulation eines mehrfachen Speicherzugriffs, so daß der nur einmal lesbare Speicher der Speichereinrichtung bei der Bildverarbeitung nach vorgegebenen Komprimierungs- und Dekomprimierungsvorschriften eingesetzt werden kann.

Ein Ausführungsbeispiel der Erfindung wird im folgenden anhand der Zeichnung näher erläutert. Dabei zeigen
- Figur 1: ein Blockschaltbild der erfindungsgemäßen Bildverarbeitungsvorrichtung mit Speichereinrichtung und Verarbeitungseinheit,
- Figur 2: ein Ausschnitt aus einer Referenz zeile und einer aktuellen Zeile,
- Figur 3: ein Blockschaltbild der erfindungsgemäßen Abstandseinheit,
- Figur 4: ein Ablaufdiagramm des Verfahrensablaufs zur Abstandsbestimmung,

Das folgende Beispiel beschreibt eine Bildverarbeitungsvorrichtung zur sequentiellen Dekodierung von Bildinformationen. Es versteht sich, daß eine Bildverarbeitungsvorrichtung zur sequentiellen Kodierung von Bildinformationen, die hier nicht beschrieben wird, in analoger Weise aufgebaut ist.

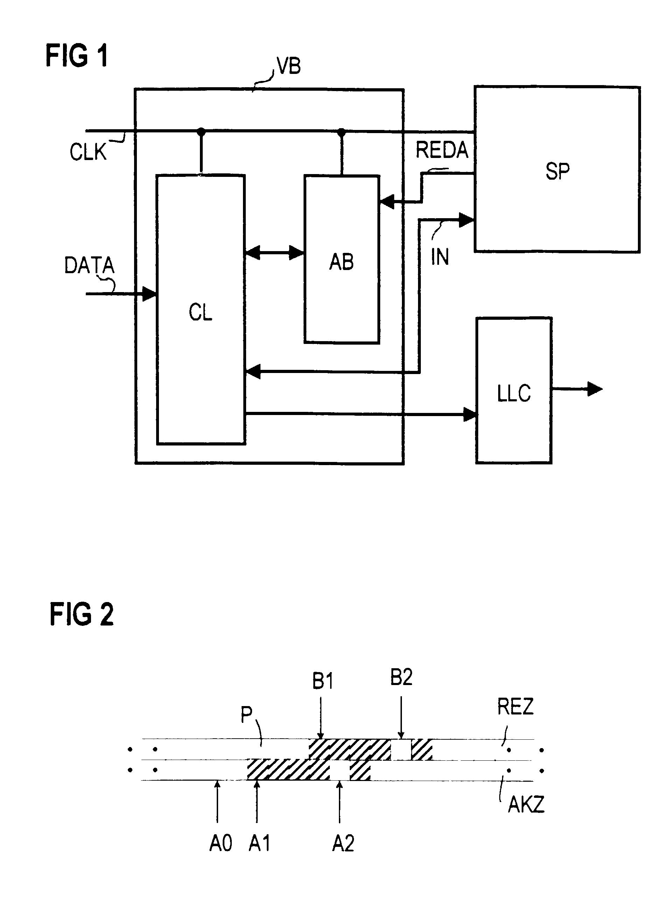

Die Bildverarbeitungsvorrichtung ist, wie im Blockschaltbild von Figur 1 gezeigt, aufgebaut. Eine Verarbeitungseinheit VB dieser Bildverarbeitungsvorrichtung, enthält eine Steuerungslogik CL und eine Abstandseinheit AB. Die Steuerungslogik CL und die Abstandseinheit AB, sind mit einer Speichereinrichtung SP gekoppelt. Ein Datenaustausch ist auch zwischen der Steuerungslogik CL und der Abstandseinheit AB möglich. Komprimierte Daten DATA, werden an die Steuerungslogik CL übergeben. Nach der Dekodierung gibt die Steuerungslogik CL eine in Lauflängen- und Farbinformation getrennte Bildinformation an einen der erfindungsgemäßen Bildverarbeitungsvorrichtung nachgeordneten Lauflängenkodierer LLC aus, der aus den Lauflängen- und Farbinformationen die einzelnen Pixel zur Bildwiedergabe erzeugt. Um eine synchrone Arbeitsweise der Verarbeitungseinheit VB und der Speichereinrichtung SP zu gewährleisten, wird diesen Komponenten ein gemeinsamer Takt CLK zugeführt.

Die Speichereinrichtung SP weist einen Eingang IN und einen Ausgang REDA auf. Über den Eingang IN werden der Speichereinrichtung SP Bildinformationen einer aktuellen Zeile in Form von Pixeln P seriell zugeführt und Steuerinformationen mit der Steuerungslogik CL ausgetauscht. Über den Ausgang REDA werden der Abstandseinheit AB Bildinformationen einer Referenzzeile REZ in Form von Pixeln P seriell zugeführt.

Sind alle Pixel P einer in der Speichereinrichtung SP abgelegten Referenz zeile REZ einmal ausgelesen, dann steht die Referenzzeile REZ nicht mehr zur Verfügung, da jedes Pixel P nur einmal ausgelesen werden kann. Anstelle dieser Referenzzeile REZ ist nun die aktuelle Zeile AKZ in der Speichereinrichtung SP vorhanden. Diese dient bei der Dekodierung der nächsten Zeile als Referenzzeile REZ.

In Figur 2 sind zwei Zeilen eines Bildes teilweise dargestellt. Jede Zeile REZ, AKZ, besteht aus einer Abfolge von viereckigen Bereichen, wobei jeder viereckige Bereich ein Pixel P repräsentiert. Leere Vierecke bezeichnen weiße Pixel P und die ausgefüllten Vierecke bezeichnen schwarze Pixel P. Die erste Zeile repräsentiert die Referenzzeile REZ und die darunter angeordnete Zeile repräsentiert die aktuelle Zeile AKZ. Zur Kodierung sind ein Ausgangspixel A0 und mehrere Übergangspixel A1,A",B1,B2 gemäß CCITT wie folgt definiert:

Ausgangspixel: Hierbei handelt es sich um das Pixel P der aktuellen Zeile AKZ, welches zum Anfangs- bzw. Startpunkt für die Kodierung wird. Dieses Ausgangspixel ist mit A0 bezeichnet.

Übergangspixel: Hierbei handelt es sich um die Pixel P, die unmittelbar auf einen Übergang von einem weißen zu einem schwarzen oder von einem schwarzen zu einem weißen Pixel P folgen. Die Übergangspixel in der aktuellen Zeile AKZ sind sequentiell mit A1 und A2 bezeichnet. Die Übergangspixel in der Referenzzeile REZ sind mit B1 und B2 bezeichnet.

Man unterscheidet nun zwischen einem Durchgangsbetrieb (Pass Mode), einem Horizontalbetrieb und einem Vertikalbetrieb. Beim Horizontalbetrieb wird die Speichereinrichtung SP zur Kodierung oder Dekodierung nicht benötigt. Beim Vertikalbetrieb und beim Durchgangsbetrieb liegt eine starke Korrelation zwischen der aktuellen Zeile AKZ und der Referenz zeile REZ vor. Die Kodierung erfolgt auf der Grundlage der nachfolgender Tabelle aus CCITT.

| Mode / Betrieb | Zu kodierende Elemente | | Symbol | Codewort |
|---|---|---|---|---|
| Pass | B1, B2 | | P | 0001 |
| Horizontal | A0A1, A1A2 | | H | 001 + M(A0A1) + M(A1A2) |
| Vertikal | A1 unter B1 | A1B1 = 0 | V(0) | 1 |
| | A1 rechts von B1 | A1B1 = 1 | VR(1) | 001 |
| | | A1B1 = 2 | VR(2) | 000011 |
| | | A1B1 = 3 | VR(3) | 0000011 |
| | A1 links von B1 | A1B1 = 1 | VL(1) | 010 |
| | | A1B1 = 2 | VL(2) | 000010 |
| | | A1B1 = 3 | VL(3) | 0000010 |

In Figur 2 ist ein Vertikalbetrieb VL(3) dargestellt. Ist die erste Dekodierung im Vertikalmodus VL(3) durchgeführt, tritt nachfolgend noch zweimal der Vertikalmodus VL(3), dann der Vertikalmodus VL(1) und schließlich der Durchgangsmodus P auf. Um diese nachfolgenden Modis korrekt zu bearbeiten, müßte die Referenzzeile REZ mehrmals an der gleichen Stelle gelesen werden. Da dies jedoch mit der verwendeten Speichereinrichtung SP nicht möglich ist, wird die erfindungsgemäße Abstandseinheit AB eingesetzt. Aus den komprimierten Daten DATA, die von der Steuerungslogik CL empfangen werden, wird das Codewort 0000010 dekodiert. Gemäß oben stehender Tabelle bedeutet dies einen Abstand A1B1 von drei Pixeln P. Außerdem ist dem Codewort zu entnehmen, daß A1 links von B1 liegt.

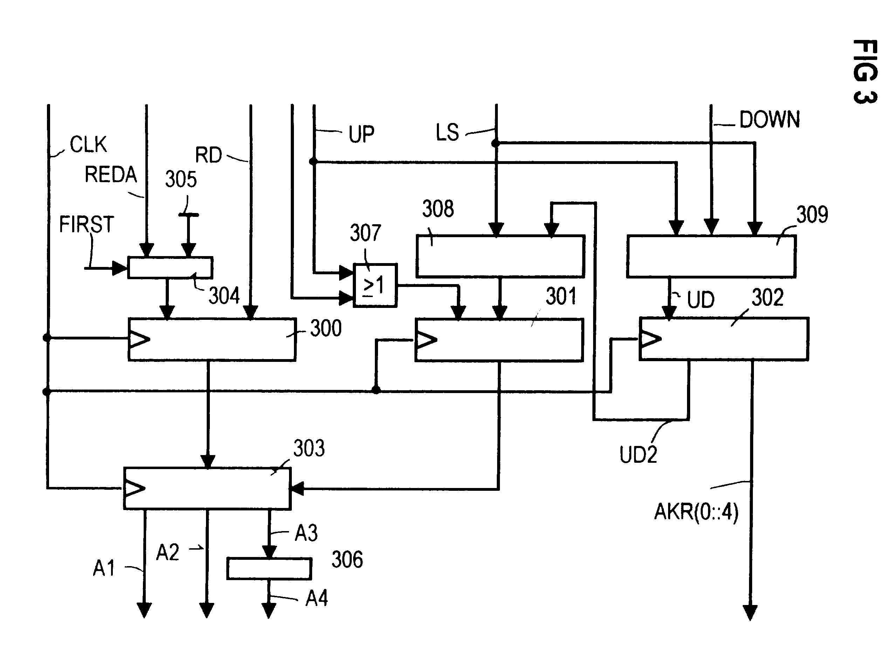

Eine solche aktuelle Zeile AKZ kann nun mit Hilfe der Abstandseinheit AB gemäß Figur 3 im Zusammenwirken mit der Steuerungslogik CL und der Speichereinrichtung SP dekodiert werden. Die Abstandseinheit AB weist ein Referenzregister 300, ein Pointerregister 301 und ein Links-Register 302 auf. Diese drei Register 300, 301, 302 und ein ebenfalls in der Abstandseinheit AB enthaltener Ausgangsmultiplexer 303, werden vom Takt CLK versorgt.

Der Eingang des Referenzregisters 300 ist mit dem Ausgang eines Multiplexers 304 gekoppelt. Mittels dieses Multiplexers 304 kann zwischen dem Ausgang REDA der Speichereinrichtung SP und einer Masseverbindung 305 ausgewählt werden. Die Auswahl wird durch ein Signal FIRST vorgenommen. Dieses Signal FIRST wird von der Steuerungslogik dann erzeugt, wenn die erste Zeile einer zu dekomprimierenden Seite einer Bildinformation dekomprimiert werden soll. Gemäß CCITT muß die erste Zeile einer Seite mit einer Referenzzeile REZ, die ausschließlich weiße Pixel P enthält, was in diesem Fall der logischen Null bzw. Masse entspricht, dekomprimiert werden. Die Übernahme eines Pixels P aus dem Multiplexer 304 erfolgt auf Grund eines von der Steuerungslogik CL erzeugten Lesesignals RD.

Der Ausgang des Referenzregisters 300 ist mit dem Eingang des Ausgangsmultiplexers 303 gekoppelt. Dieser Ausgangsmultiplexer 303 wählt, gesteuert durch das Pointregister 301, eines von vier Pixeln P der Referenzzeile REZ aus dem Referenzregister 300 aus. Der Ausgangsmultiplexer 303 weist drei Ausgänge auf. Am ersten Ausgang A1 wird bei entsprechender Anforderung das zuletzt von der Referenzzeile REZ gelesene Pixel P ausgegeben. Am zweiten Ausgang A2 wird das Pixel P der Referenz zeile REZ ausgegeben, das auf Grund des dekodierten Codewortes zum aktuellen Dekodierungsvorgang benötigt wird. An einem dritten Ausgang A3 werden die drei zuletzt empfangenen Pixel P der Referenzzeile REZ ausgegeben. Die am dritten Ausgang A3 ausgegebenen Pixel P werden in einem Vergleicher 306 auf Gleichheit überprüft. Am Ausgang A4 dieses Vergleichers 306 wird dann ein aktives Signal ausgegeben, wenn drei Pixel P mit dem gleichen Wert detektiert werden. Dieses Signal wird zur korrekten Zeilenendeerkennung der zweidimensional kodierten Datenströme benötigt.

Das Pointerregister 301 bestimmt, welche Pixel P an den Ausgängen Al bis A3 des Ausgangsmultiplexers 303 ausgegeben werden. Dazu ist das Pointerregister 301 mit dem Ausgang eines ODER-Gatters 307 und dem Ausgang einer Pointerlogik 308 gekoppelt. Das ODER-Gatter 307 verknüpft ein erstes Signal NE und eine zweites Signal OP miteinander. Tritt eines der beiden Signale NE, OP auf, dann werden die Pointerlogik 308 und das Pointerregister 301 zurückgesetzt. Das erste Signal NE wird dann aktiv, wenn die Steuerungslogik CL ein neues Codewort dekodiert. Das zweite Signal UP wird dann aktiv, wenn ein Vertikal-Rechts-Modus VR(1), VR(2), VR(3) oder ein Vertikal-Null-Modus V(0) nach einem vorangegangenen Vertikal-Links-Modus VL(1..3) erkannt wird. Mit dem zweiten Signal UP wird ein Bezug geschaffen, welchen Abstand das abgetastete Pixel P der Referenzzeile REZ und das zu dekomprimierende Pixel P der aktuellen Zeile AKZ haben, wenn ein Vertikal-Links-Modus vorausgegangen war.

Das zweite Signal UP wird auch einem Eingang eines Zählers 309 zugeführt. Einem anderen Eingang dieses Zählers 309 wird ein drittes Eingangssignal DOWN zugeführt. Dem dritten Eingang des Zählers wird ein viertes Eingangssignal LS zugeführt. Dieses vierte Eingangssignal LS wird von der Steuerungslogik CL am Beginn einer neuen Zeile generiert. Das vierte Eingangssignal LS bewirkt ein Rücksetzen des Zählers 309 und des Linksregisters 302. Da das vierte Eingangssignal LS auch mit einem Eingang der Pointerlogik 308 gekoppelt ist, werden auch diese Pointerlogik 308 und das Pointerregister 301 durch das vierte Eingangssignal LS zurückgesetzt.

Das dritte Eingangssignal DOWN wird dann aktiv, wenn ein Vertikal-Links-Modus VL(1...3) von der Steuerungslogik CL erkannt wurde. Mit diesem dritten Eingangssignal DOWN wird durch die Steuerungslogik CL der Abstandseinheit AB mitgeteilt, welchen Abstand das abgetastete Pixel P der Referenzzeile REZ und das zu dekomprimierende Pixel P der aktuellen Zeile AKZ haben. Der Ausgang des Zählers UD ist mit dem Eingang des Linksregisters 302 gekoppelt. Das Linksregister 302 erzeugt ein Zustandssignal AKR(0..4), das der Steuerungslogik CL den Zustand der Abstandseinheit AB mitteilt. Insbesondere haben die Zustandssignale AKR(0..4) folgende Bedeutung:
AKR(0): aktuelle Zeile AKZ zu Referenzzeile REZ = 0
AKR(1): aktuelle Zeile AKZ zu Referenzzeile REZ = 1
AKR(2): aktuelle Zeile AKZ zu Referenzzeile REZ = 2
AKR(3): aktuelle Zeile AKZ zu Referenzzeile REZ = 3
AKR(4): aktuelle Zeile AKZ zu Referenzzeile REZ = 1, 2 oder 3
Der Zustand AKR(4) ist eine Veroderung der Zustände AKR(3), AKR(2) und AKR(1) und wird nur von der Steuerungslogik CL benötigt.

Ein zweiter Ausgang UD2 des Linksregisters 302, der die ersten vier Zustandssignale AKR(0..3) ausgibt, ist zu einem Eingang der Pointerlogik 308 geführt. Durch diese Verbindung kann der aktuelle Zustand des Linksregisters 302 nach Auftreten eines ersten Signals NE oder eines zweiten Signals UP in die Pointerlogik 308 übertragen werden. Diese Übertragung findet also immer dann statt, wenn ein neues Codewort mit Hilfe der Steuerungslogik CL aus dem komprimierten Datenstrom DATA dekodiert wird. Dadurch wird sichergestellt, daß stets der aktuelle Abstand zwischen einem Farbwechsel in der Referenzzeile REZ und der aktuellen Zeile AKZ im Pointerregister 301 zur Verfügung steht.

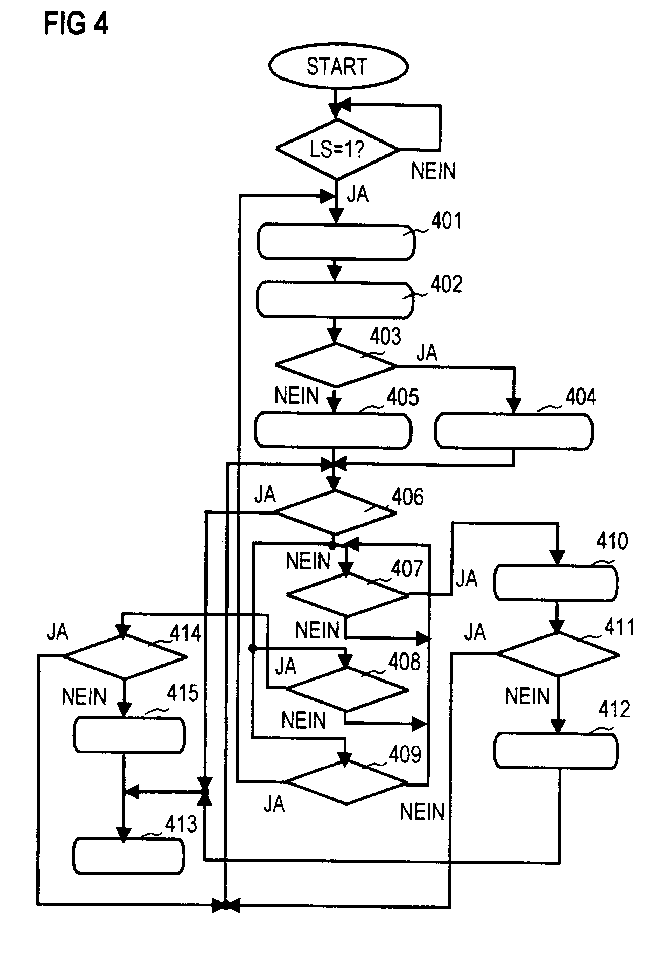

Nachfolgend wird ein Ablaufdiagramm der Abstandsbestimmung gemäß der Erfindung anhand der Figuren 4a bis 4b erläutert. Ausgehend von einer Startbedingung, bei der die Register 300, 301 und 302 der Abstandseinheit AB zurückgesetzt sind, wartet die Abstandseinheit AB auf das Setzen des vierten Eingangssignals LS. Dieses vierte Eingangssignal LS signalisiert den Beginn einer Zeile. Wird ein solcher Beginn von der Steuerungslogik CL gemeldet, wird in einem ersten Schritt 401 der Zähler 309 auf den Wert 0001 gesetzt, dieser Zählerstand wird in das Linksregister 302 übertragen. Das Abstandssignal AKR ist damit auf den Wert AKR(0) gesetzt. Dies bedeutet einen Abstand der aktuellen Zeile zur Referenzzeile REZ von 0.

In einem zweiten Schritt 402 wird die Pointerlogik 308 mit dem Wert des zweiten Ausgangs UD2 des Linksregisters 302 aktualisiert. Das Pointerregister 301 und der Ausgangsmultiplexer 303 werden jeweils durch den Ausgang der Pointerlogik 308 bzw. durch den Ausgang des Pointerregisters 301 aktualisiert. Damit sind durch die ersten beiden Schritte 401, 402 die Funktionseinheiten der Abstandseinheit AB in einen Grundzustand zur Abstandsbestimmung beim Dekodieren einer aktuellen Zeile AKZ eingestellt. In einem nachfolgenden dritten Schritt 403 wird überprüft, ob das Signal FIRST gesetzt ist. Ist dies der Fall, dann wird der Ausgang des Multiplexers 304 mit dem geerdeten Eingang 305 verbunden. Andernfalls wird der Eingang des Multiplexers 304 mit dem Datenausgang REDA der Speichereinheit SP verbunden. Diese Auswahl wird durch die Schritte 404 bzw. 405 getroffen. In einem nachfolgenden sechsten Schritt 406 wird überprüft, ob das erste Signal NE gesetzt ist. Ist dies nicht der Fall, dann wird in einem siebten Schritt überprüft, ob das dritte Eingangssignal DOWN und das Lesesignal RD gesetzt sind. Damit wird überprüft, ob ein Vertikal-Links-Modus VL vorliegt. Ist dies nicht der Fall, dann überprüft die Abstandseinheit AB in einem achten Schritt 407, ob ein Vertikal-Rechts-Modus VR vorliegt. Ist dies ebenfalls nicht der Fall, dann wird in einem neunten Schritt 409 überprüft, ob ein Zeilenende vorliegt. Im Falle eines Zeilenendes beginnt der Vorgang mit dem Schritt 401 von neuem.

Ist ein Vertikal-Links-Modus VL erkannt, dann wird in einem zehnten Schritt 410 der Zählerstand des Zählers 309 um 1 erhöht. Die im Zähler 309 enthaltene Logik überprüft in einem elften Schritt 411, ob der Zählerstand den Wert 1000 erreicht hat. Wird die Überprüfung positiv beantwortet, dann wird das Verfahren mit dem sechsten Schritt 406 fortgesetzt. Bei negativer Antwort erfolgt in einem zwölften Schritt 412 eine Übertragung des Inhalts des Zählers 309 in das Linksregister 302. Die Ausgänge des Linksregisters AKR(0..4) und UD2, werden damit aktualisiert.

In einem drei zehnten Schritt 413 wird das Datum des zweiten Ausgangs UD2 des Linksregisters 302 in die Pointerlogik 308 übernommen und von dort in das Pointerregisters 301 übertragen. Mit Hilfe des Ausgangs dieses Pointerregisters 301 wird der Ausgangsmultiplexer 303 so gesteuert, daß er aus den vier im Referenzregister 300 gespeicherten Pixeln P das richtige, aktuell von der Steuerungslogik CL benötigte Pixel P auswählt und an seinem zweiten Ausgang A2 zur Steuerungslogik CL ausgibt. Im Referenzregister 300 sind stets das aktuell aus der Speichereinrichtung SP gelesene Pixel und die drei vorher gelesenen Pixel P verfügbar. Damit wird trotz Verwendung einer Speichereinrichtung SP, deren Daten nur einmal lesbar sind, deren Verwendung in einer Kodier- oder Dekodiervorrichtung von Bildinformationen ermöglicht.

Wird im achten Schritt 408 ein Vertikal-Rechts-Modus VR erkannt, dann wird in einem vierzehnten Schritt 414 überprüft, ob der Zählerstand des Zählers 309 den Wert 0001 aufweist. Ist dies der Fall, wird das Verfahren mit dem sechsten Schritt 406 fortgesetzt. Ist dies nicht der Fall, wird der Zähler 309 um 1 erhöht und das Linksregister 302, sowie dessen Ausgänge UD2, AKR in einem fünfzehnten Schritt 414 aktualisiert. Das Verfahren wird mit dem dreizehnten Schritt 413 fortgesetzt.

## Patentansprüche

1. Bildverarbeitungsvorrichtung zur sequentiellen Kodierung und Dekodierung von Bildinformationen, die in einer Sequenz von einer Mehrzahl von Zeilen vorliegen und so kodiert sind, daß die Bildinformation einer aktuellen Zeile (AKZ) mit der Bildinformation einer Referenzzeile (REZ), die der vorhergehenden Zeile entspricht, verknüpft ist, mit
- einer Speichereinrichtung (SP), in die die Pixel (P) der aktuellen Zeile (AKZ) sequentiell eingebbar sind und aus der die Pixel (P) der Referenzzeile (REZ) sequentiell auslesbar sind, wobei die Speichereinrichtung (SP) eine geringfügig größere Kapazität, als zur Aufnahme der Pixel einer vollständigen Zeile erforderlich ist, aufweist und einmal ausgelesene Pixel (P) der Referenzzeile (REZ) sequentiell durch Pixel (P) der aktuellen Zeile (AKZ) überschreibbar sind,
- einer mit der Speichereinrichtung (SP) gekoppelten Steuerungslogik (CL), die die Verknüpfung der aktuellen Zeile (AKZ) mit der Referenzzeile (REZ) durchführt und
- einer Abstandseinheit (AB) zur Steuerung des Pixel abstandes zwischen aktueller und Referenzzeile, die von der Speichereinrichtung (SP) taktgesteuert jeweils nur einen Teil der Pixel (P) einer Referenzzeile (REF) übernimmt, abspeichert und der Steuerungslogik (CL) die jeweils benötigten Pixel zuführt und bei Bedarf erneut zur Verfügung stellt, und wobei
- der Speichereinrichtung (SP), der Steuerungslogik (CL) und der Abstandseinheit (AB) ein gemeinsamer Takt (CLK) zur taktsynchronen Verarbeitung der Bildinformationen zugeführt wird.

2. Bildverarbeitungsvorrichtung nach Anspruch 1 deren Abstandseinheit (AB) aufweist:
- ein Referenzregister (300) zum sequentiellen Speichern von aus der Speichereinrichtung (SP) ausgelesenen Pixeln (P),
- eine Auf- /Abwärts- Zähleinrichtung (309), die von der Steuerungslogik (CL) ansteuerbar ist,
- ein Linksregister (302), das ein Zustandssignal (AKR), das Auskunft über die Position eines aktuell ausgegebenen Pixels (P) liefert, an die Steuerungslogik (CL) ausgibt, und
- eine Pointerlogik (308, 301) die abhängig von Steuersignalen der Steuerungslogik (CL) und dem Zustandssignal (AKR ,UD2) mittels eines Multiplexers (303) ein Pixel (P) aus dem Referenzregister (300) auswählt.

## Claims

1. Image processing apparatus for the sequential coding and decoding of image information items which are present in a sequence of a plurality of lines and are coded in such a way that the image information of a current line (AKZ) is logically combined with the image information of a reference line (REZ), which corresponds to the preceding line, having
- a storage device (SP), into which the pixels (P) of the current line (AKZ) can be sequentially input and from which the pixels (P) of the reference line (REZ) can be sequentially read, the storage device (SP) having a slightly larger capacity than is necessary for accommodating the pixels of a complete line, and it being possible for pixels (P) of the reference line (REZ) which have been read out once to be sequentially overwritten by pixels (P) of the current line (AKZ)
- a control logic arrangement (CL), which is coupled to the storage device (SP) and carries out the logic combination of the current line (AKZ) with the reference line (REZ), and
- a spacing unit (AB) for the control of the pixel spacing between current line and reference line, which unit accepts from the storage device (SP) in a manner under the control of a clock signal, in each case only a portion of the pixels (P) of a reference line (REF), stores the said portion and feeds the respectively required pixels to the control logic arrangement (CL) and, if required, makes them available again, and
- the storage device (SP), the control logic arrangement (CL) and the spacing unit (AB) being fed a common clock signal (CLK) for the purpose of clock-synchronous processing of the image information items.

2. Image processing apparatus according to Claim 1, whose spacing unit (AB) has:
- a reference register (300) for the sequential storage of pixels (P) read from the storage device (SP),
- an up/down counting device (309), which can be driven by the control logic arrangement (CL),
- a left register (302), which outputs to the control logic arrangement (CL) a state signal (AKR) supplying information about the position of a currently output pixel (P), and
- a pointer logic arrangement (308, 301), which selects a pixel (P) from the reference register (300) as a function of control signals of the control logic arrangement (CL) and the state signal (AKR, UD2) by means of a multiplexer (303).

## Revendications

1. Dispositif de traitement d'images pour le codage et le décodage séquentiels de données-image qui se présentent en une séquence d'une pluralité de lignes et sont codées de manière que les données-image d'une ligne actuelle (AKZ) soient combinées aux données-image d'une ligne de référence (REZ) qui correspond à la ligne précédente, comprenant :
- un dispositif de mémoire (SP) dans lequel les pixels (P) de la ligne actuelle (AKZ) peuvent être entrés séquentiellement, et dans lequel les pixels (P) de la ligne de référence (REZ) peuvent être lus séquentiellement, le dispositif de mémoire (SP) présentant une capacité légèrement supérieure à celle qui est nécessaire pour recevoir les pixels d'une ligne complète, et les pixels (P) de la ligne de référence (REZ) qui ont été lus précédemment pouvant être écrasés séquentiellement par des pixels (P) de la ligne actuelle (AKZ),
- une logique de commande (CL) connectée au dispositif de mémoire (SP) et qui exécute la combinaison de la ligne actuelle (AKZ) avec la ligne de référence (REZ) et
- une unité d'espacement (AB) destinée à commander l'espacement des pixels entre la ligne actuelle et la ligne de référence, et qui, à un rythme d'horloge, prélève à chaque période dans le dispositif de mémoire (SP) une partie seulement des pixels (P) d'une ligne de référence (REF) et les met en mémoire, puis, transmet à la logique de commande (CL) et met de nouveau à sa disposition, à la demande, les pixels dont elle a besoin à chaque période, et dans lequel
- un rythme d'horloge commun (CLK) est transmis au dispositif de mémoire (SP), à la logique de commande (CL) et à l'unité d'espacement (AB) pour synchroniser le traitement des données-image selon ce rythme d'horloge.

2. Dispositif de traitement d'images selon la revendication 1, dont l'unité d'espacement (AB) comprend :
- un registre de référence (300), destiné à mémoriser séquentiellement des pixels (P) lus dans le dispositif de mémoire (SP),
- un dispositif incrémenteur/décrémenteur (309), qui peut être commandé par la logique de commande (CL),
- un registre à décalage vers la gauche (302) qui transmet à la logique de commande (CL) un signal d'état (AKR) qui donne une indication sur la position d'un pixel (P) émis actuellement, et
- une logique de pointeur (308, 301) qui sélectionne un pixel (P) dans le registre de référence (300) au moyen d'un multiplexeur (303) en fonction de signaux de commande de la logique de commande (CL) et du signal d'état (AKR, UD2).
